# EUROPEAN PATENT APPLICATION

(11) **EP 4 358 305 A1**
(43) Date of publication of application: **24.04.2024**
(21) Application number: 22923177.4
(22) Date of filing: 29.06.2022
(51) Int. Cl.: H01Q 15/08, H01Q 19/06

(54) **LUNEBURG LENS MANUFACTURING DEVICE AND METHOD, AND LUNEBURG LENS**

(30) Priority: 28.01.2022 CN 202210106832
(71) Applicant: CICT Mobile Communication Technology Co., Ltd, Wuhan, Hubei 430205 (CN)
(72) Inventor: YANG, Nengwen, Wuhan, Hubei 430205 (CN); WU, Weihua, Wuhan, Hubei 430205 (CN)
(74) Representative: Studio Torta S.p.A.
(86) International application number: PCT/CN2022/102383
(87) International publication number: WO 2023/142369

(57) **Abstract**

Provided in the present application are a Luneburg lens manufacturing device and method and a Luneburg lens. The Luneburg lens manufacturing device comprises a winding and weaving main body, a winding member, a strip-shaped material supporting member and a first driving member, wherein the winding and weaving main body is provided with a fixing position, which is used for fixing one end of a strip-shaped material; the strip-shaped supporting member is provided with a first via hole, and the strip-shaped material passes through the first via hole; the winding member is connected to the end of the strip-shaped supporting member that is away from the winding and weaving main body, and the winding member is connected to the first driving member; and under the driving of the first driving member, the winding member can drive, by means of the strip-shaped material supporting member, the strip-shaped material to be wound and woven around a surface of the winding and weaving main body. A Luneburg lens is manufactured by means of the Luneburg lens manufacturing device, which does not need a forming mold, is simple in terms of process, effectively avoids the problems in the prior art of the manufacturing of a Luneburg lens being complex in terms of process and low in terms of production efficiency, saves on the cost, and reduces the process difficulty.

## Description

### CROSS-REFERENCE TO RELATED APPLICATION

The present application claims priority to Chinese patent application No. 202210106832.6 filed on January 28, 2022, entitled "Luneburg Lens Manufacturing Device and Method, and Luneburg Lens", which is hereby incorporated by reference in its entirety.

### FIELD

The present application relates to the field of communication, in particular to an apparatus and a method for manufacturing a Luneburg lens, and a Luneburg lens.

### BACKGROUND

As the front-end device of communication systems, antennas are mainly used to transmit and receive electromagnetic wave signals. To match the development trend of communication systems, antennas are facing continuous development and upgrading. The Luneburg lens is generally designed as a sphere, with a regularly decreasing gradient distribution of dielectric constant from the center to the surface along radial direction. This design allows incident electromagnetic waves from any direction to always focus to a point on the surface of the lens after refraction. The radiation units of the Luneburg lens antenna are placed along the surface of the Luneburg sphere, and the emitted spherical waves are refracted into plane waves by the Luneburg sphere with a gradient distribution of dielectric constant. Therefore, even if only a single radiation unit is used, the Luneburg lens antenna may still form a narrow-beam and get a high gain. A plurality of radiation units may be placed along the surface of the Luneburg sphere, each of the radiation units may form an independent beam, and radiation features of different beams are almost identical except for different directions. The above features make Luneburg lens antenna have outstanding advantages over mainstream plate antennas in narrow-beam and multi-beam antennas, such as low power consumption, light weight, small size, high gain, and good beam consistency. At present, the dielectric constant of a spherical Luneburg lens has a decreasing gradient distribution in the two-dimensional direction of the sphere.

Traditional methods for manufacturing the Luneburg lens mainly include three types.

The first type is layered manufacturing method, which uses several layers of shells and adjusts material dielectric constants of each of the layers of shells through processing, to make different shells have dielectric constants distributed based on a certain pattern. The disadvantage of this method is that the number of the layers is large, which may easily lead to a large amount of steps when processing. Each of the layers having different material dielectric constants makes it difficult for sorting and debugging, and it is also prone to a problem of discontinuous interface between shells and a need for molding through a plurality of molds.

The second type is material-reducing manufacturing method based on the equivalent medium theory and technology. By opening holes on the dielectric material according to certain rules, the relative density of the material caused by different hole sizes is different, achieving different equivalent dielectric constants at different positions. The disadvantage of this method is that it requires a specific cutting tool for machining, which poses problems such as difficulty in clamping, complex processing, low manufacturing efficiency, and difficulty in ensuring dimensional accuracy.

The third type is 3D printing manufacturing method. A Luneburg lens is formed by layering printing based on designed shapes, and relative densities of materials are different due to different shapes of the layers, to achieve that different positions have different equivalent dielectric constants. The disadvantage of this method is that raw materials could not be easily obtained and processes such as melting, sintering, and solidification are required, resulting in low manufacturing efficiency and long manufacturing cycles.

In summary, traditional technologies have problems such as difficulty in obtaining raw materials, complex processes and low manufacturing efficiency.

### SUMMARY

The present application provides an apparatus and a method for manufacturing a Luneburg lens, and a Luneburg lens, to solve the problems of complex process and low efficiency of manufacturing Luneburg lens in the related art.

The present application provides an apparatus for manufacturing a Luneburg lens, including: a winding and weaving main body, a winding member, a strip material support and a first driver,
where the winding and weaving main body is equipped with a fixing position, the fixing position is used to fix an end of a strip material, the strip material support is equipped with a first via hole, and the strip material passes through the first via hole; and
the winding member is connected to an end of the strip material support away from the winding and weaving main body, the winding member is connected to the first driver, and under a drive of the first driver, the winding member drives, through the strip material support, the strip material to wind and weave on a surface of the winding and weaving main body.

According to the apparatus for manufacturing the Luneburg lens of the present application, it further includes a tensioning member, where the tensioning member is disposed at a side of the strip material support away from the winding and weaving main body, the tensioning member is equipped with a second via hole, the strip material passes through the second via hole, and the tensioning member is used to adjust an included angle between the strip material and the strip material support.

According to the apparatus for manufacturing the Luneburg lens of the present application, it further includes an adhesive coating component, where the adhesive coating component includes two rotation wheels, the strip material is sandwiched between the two rotation wheels, and rotation directions of the two rotation wheels are opposite.

According to the apparatus for manufacturing the Luneburg lens of the present application, it further includes a first control motion component, where the first control motion component is detachably connected to a side of the winding and weaving main body away from the winding member; and
the first control motion component includes: a curved track, a motion component and a second driver, where the motion component is adapted to the curved track, the winding and weaving main body is disposed at the curved track through the motion component, and under a drive of the second driver, the winding and weaving main body moves along an extension direction of the curved track.

According to the apparatus for manufacturing the Luneburg lens of the present application, the first control motion component further includes a limiter,
where the limiter is disposed at a side of the curved track away from the winding and weaving main body, and the limiter is provided corresponding to the motion component.

According to the apparatus for manufacturing the Luneburg lens of the present application, it further includes a second control motion component, where the second control motion component is connected to an end of the first control motion component; and
the second control motion component includes: a rotating motion shaft and a third driver, where the rotating motion shaft is connected to an end of the curved track, and under a drive of the third driver, the rotating motion shaft drives the winding and weaving main body to rotate around the fixing position.

The present application further provides a method for manufacturing a Luneburg lens, where the method is used to manufacture a Luneburg lens using the apparatus for manufacturing the Luneburg lens as described in any one of the above embodiments, and the method for manufacturing the Luneburg lens includes:
preparing a winding and weaving main body and a strip material;
threading a free end of the strip material through a first via hole and a fixing position sequentially; and
starting a first driver to drive a winding member for driving a strip material support to rotate around an axis direction of the winding member to manufacture a Luneburg lens, where the strip material is winded around the winding and weaving main body.

According to the method for manufacturing the Luneburg lens of the present application, the winding member rotates around the axis direction of the winding member, the winding and weaving main body moves along an extension direction of the curved track and rotates around the fixing position, and the strip material is winded around the winding and weaving main body to manufacture a spherical or ellipsoidal Luneburg lens.

The present application further provides a Luneburg lens, where the Luneburg lens is manufactured according to any one of the method for manufacturing the Luneburg lens as described above, and the Luneburg lens includes: a winding and weaving core and a strip material;
the winding and weaving core includes a winding portion and a support portion, where the winding portion is equipped with a fixing position, an end of the strip material is connected to the fixing position, and the support portion is connected to the winding portion; and
the strip material is disposed at a surface of the winding portion in a winding manner, and between a winding layer composed of the strip material is equipped with an adhesive.

According to the Luneburg lens of the present application, the Luneburg lens is spherical or ellipsoidal.

According to the Luneburg lens of the present application, a dielectric constant of the strip material is not less than 2.

According to the apparatus and the method for manufacturing the Luneburg lens, and the Luneburg lens of the present application, the free end of the strip material is sequentially threaded through the first via hole of the strip material support and the fixing position on the winding and weaving main body. The strip material support is used to abut against the strip material, making the strip material in a tension state. The winding member moves under the drive of the first driver, to drive, through the strip material support, the strip material wind layer by layer on the surface of the winding and weaving main body, and the Luneburg lens is thus made. By using such apparatus to manufacture the Luneburg lenses, forming molds is no longer needed, and the process is simple, effectively avoiding the problems of complex manufacturing process and low manufacturing efficiency in the related art. The apparatus and the method for manufacturing the Luneburg lens, and the Luneburg lens of the present application save the costs of manufacturing the Luneburg lens and reduce the difficulty of the process.

### BRIEF DESCRIPTION OF THE DRAWINGS

To provide a clearer description of the solutions in the present application, a brief introduction is given to the accompanying drawings required in the description of embodiments of the present application. It should be noted that the accompanying drawings in the following description are some embodiments of the present application. For those ordinarily skilled in the art, other accompanying drawings may be obtained based on these drawings without any creative effort.
FIG. 1 is a schematic structural diagram of an apparatus for manufacturing a Luneburg lens according to an embodiment of the present application;
FIG. 2 is a schematic diagram of a cross-sectional structure of a first control motion component according to an embodiment of the present application; and
FIG. 3 is a schematic diagram of a spherical Luneburg lens according to an embodiment of the present application.

### Reference signs:

1: winding and weaving main body; 11: fixing position; 12: winding portion; 13: support portion; 2: winding member; 3: strip material support; 31: first via hole; 4: strip material; 5: tensioning member; 51: second via hole; 6: adhesive coating component; 61: rotation wheel; 7: first control motion component; 71: curved track; 72: motion component; 73: second driver; 74: limiter; 8: second control motion component; 81: rotating motion shaft; 82: third driver; 9: adhesive.

### DETAILED DESCRIPTION

To make the objectives, technical solutions, and advantages of the present application clearer, the following provides a clear and complete description of the technical solutions in the present application in conjunction with the accompanying drawings. The described embodiments are part of the embodiments of the present application, not all of them. Based on the embodiments in the present application, all other embodiments obtained by those of ordinary skill in this field without creative effort fall within the scope of protection in the present application.

In the description of the embodiments of the present application, it should be noted that the terms "center", "upper", "lower", "left", "right", "top", etc. indicate the orientation or position relationship based on the orientation or position relationship shown in the accompanying drawings, only for the convenience of describing the embodiments of the present application and simplifying the description, rather than indicating or implying that the apparatus or element referred to must have a specific orientation, be constructed or operated in a specific orientation. Therefore, it may not be understood as a limitation on the embodiments of the present application.

In the description of the present application, it should be noted that unless otherwise specified and limited, the terms "equipped", "connected", etc. should be understood broadly, such as "connected", which may be a fixed connection, a detachable connection, or an integrated connection; it may be a mechanical connection or an electrical connection; it may be directly connected, indirectly connected through intermediate media, or connected internally between two elements. For those of ordinary skill in this field, the specific meanings of the above terms in the present application may be understood according to the specific situation.

The embodiments of the present application provide an apparatus and a method for manufacturing a Luneburg lens, and a Luneburg lens, to solve the problems of complex Luneburg lens manufacturing process and low manufacturing efficiency in the related art.

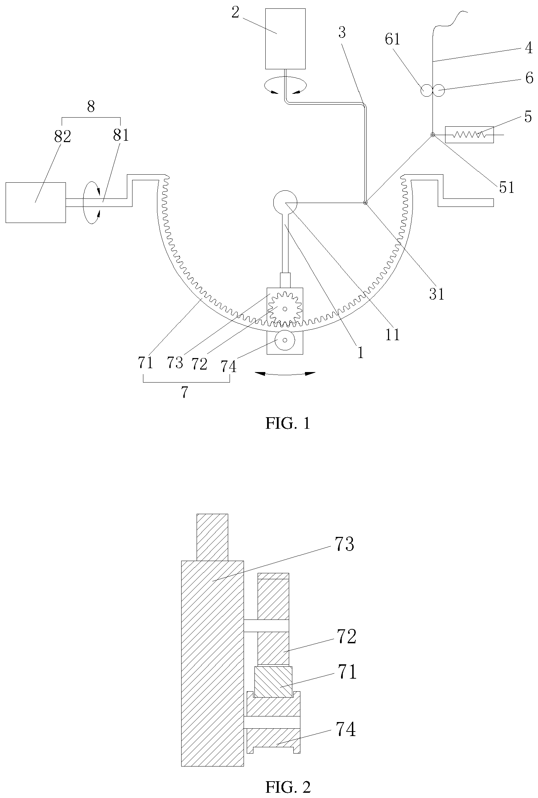

An apparatus and a method for manufacturing a Luneburg lens, and a Luneburg lens according to the embodiments of the present application are described below in conjunction with FIG. 1 to FIG. 3.

As shown in FIG. 1, an embodiment of the present application provides an apparatus for manufacturing a Luneburg lens, including: a winding and weaving main body 1, a winding member 2, a strip material support 3 and a first driver.

The winding and weaving main body 1 is equipped with a fixing position 11, the fixing position 11 is used to fix an end of a strip material 4, the strip material support 3 is equipped with a first via hole 31, and the strip material 4 passes through the first via hole 31.

The winding member 2 is connected to an end of the strip material support 3 away from the winding and weaving main body 1, and the winding member 2 is connected to the first driver. Under a drive of the first driver, the winding member 2 drives, through the strip material support 3, the strip material 4 to wind and weave on a surface of the winding and weaving main body 1.

In an embodiment, dimensions of the strip material 4 and the winding and weaving main body 1 is designed using an electromagnetic simulation software. The designed and calculated strip material 4 and the winding and weaving main body 1 are used to make the Luneburg lens. The design premise for the strip material 4 and the winding and weaving main body 1 is to ensure that a relative dielectric constant of the manufactured Luneburg lens meets a variation law: ε (r) = 2 - (r / R) ² (0 ≤ r ≤ R), where r is a distance from a current position to a center of a sphere, and R is a radius of a Luneburg lens antenna.

An external shape of the winding and weaving main body 1 is proportional to the overall Luneburg lens, and the winding and weaving main body 1 is the foundation of the winding and weaving. The winding and weaving main body 1 is a columnar structure, which may be a solid structure or a hollow structure, as long as the structure is with a certain hardness. The winding and weaving main body 1 uses homogeneous materials including but not limited to polypropylene, polyethylene, polyvinyl chloride, polystyrene, polyurethane, polycarbonate, etc.

The winding and weaving main body 1 is equipped with the fixing position 11, and the fixing position 11 is provided at an end of the winding and weaving main body 1. For example, when manufacturing a spherical or ellipsoidal Luneburg lens, as shown in FIG. 1, the fixing position 11 is disposed at a top end of the winding and weaving main body 1. By designing a hole structure at the top end of the winding and weaving main body 1, the strip material 4 passes through the hole and is fixed at the top end of the winding and weaving main body 1.

The material of winding member 2 may include any one of polypropylene, polyethylene, polyvinyl chloride, polystyrene, polyurethane and polycarbonate, and is not limited to the above materials. The winding member 2 is a columnar structure, which may be a solid structure or a hollow structure, and the structure has certain hardness and may drive the strip material support 3 to pull the strip material 4 to rotate. As shown in FIG. 1, the winding member 2 is connected to the end of the strip material support 3 away from the winding and weaving main body 1, and a function of the winding member 2 is to drive, under an action of the first driver, the strip material 4 to rotate and weave on the surface of the winding and weaving main body 1.

As shown in FIG. 1, the strip material support 3 is a right-angle rod structure, with an end connected to the winding member 2 and another end equipped with the first via hole 31. The strip material 4 passes through the first via hole 31 and is fixed to the fixing position 11 on the winding and weaving main body 1. The function of providing the strip material support 3 is to not only support the strip material 4 to drive the movement of the strip material 4, but also use the strip material support 3 to abut against the strip material 4 to make the strip material 4 in a tight state. Under the drive of the first driver, the strip material support 3 and the winding and weaving main body 1 maintain a rotating motion state, to achieve a layer-by-layer winding of the strip material 4 on the winding and weaving main body 1, making a proportion of air/strip material 4 in each layer gradually increasing from the inside to the outside based on a pre-calculated value, thereby achieving the change of the equivalent dielectric constant of the mixture consists of air and strip material based on a pre-calculated law.

In an embodiment of the present application, the first driver is preferably a numerical control motor, which controls a rotation speed and rotation direction of the winding member 2. By controlling the numerical control motor, the winding and weaving spacing and winding and weaving mode for the strip material 4 may be controlled. The winding and weaving direction between each layer of the strip material 4 is misaligned, and the winding and weaving spacing may be set according to needs, which may further improve the strength of the Luneburg lens, thus improving the radiation performance of the Luneburg lens.

It should be noted that the apparatus for manufacturing the Luneburg lens provided in the embodiments of the present application may be arranged vertically or horizontally. The specific arrangement mode depends on the actual situation, and the arrangement mode does not affect the function.

In the apparatus for manufacturing the Luneburg lens provided by the embodiments of the present application, the free end of the strip material 4 is sequentially threaded through the first via hole 31 of the strip material support 3 and the fixing position 11 on the winding and weaving main body 1, and the strip material support 3 is used to abut against the strip material 4, causing the strip material 4 to be in the tight state. The winding member 2 is driven by the first driver to move, and then drive, through the strip material support 3, the strip material 4 to wind on the surface of the winding and weaving main body 1, and then the Luneburg lens is made by winding the strip material layer by layer. By using such apparatus to manufacture the Luneburg lenses, forming molds is no longer needed, and the process is simple, effectively avoiding the problems of complex manufacturing process and low manufacturing efficiency in the related art. The apparatus for manufacturing the Luneburg lens provided by the embodiments of the present application saves the costs of manufacturing Luneburg lenses and reduces the difficulty of the process.

In an optional embodiment, the apparatus for manufacturing the Luneburg lens further includes a tensioning member 5. The tensioning member 5 is disposed at a side of the strip material support 3 away from the winding and weaving main body 1. The tensioning member 5 is equipped with a second via hole 51, and the strip material 4 passes through the second via hole 51. The tensioning member 5 is used to adjust an included angle between the strip material 4 and the strip material support 3.

In an embodiment, as shown in FIG. 1, a side of the strip material support 3 away from the winding and weaving main body 1 is equipped with the tension member 5. The purpose of providing the tension member 5 is to make the strip material 4 pass through the second via hole 51 of the tension member 5 to be tightened, thereby maintaining an appropriate tension for the strip material 4 during the weaving procedure, avoiding the strip material 4 from being too loose and dragged out. But the strip material 4 should be avoided from being too tight and breaking. The tensioning member 5 may adopt a spring structure or a rubber member, with no specific structure restrictions. Structures that meet the requirements for achieving tensioning function are also applicable.

In an optional embodiment, the apparatus for manufacturing the Luneburg lens further includes an adhesive coating component 6, where the adhesive coating component 6 includes two rotation wheels 61. The strip material 4 is sandwiched between the two rotation wheels 61, and rotation directions of the two rotation wheels 61 are opposite.

In an embodiment, as shown in FIG. 1, the adhesive coating component 6 is disposed above the tensioning member 5, and the adhesive coating component 6 includes two rotation wheels 61. During winding and weaving, the strip material 4 is pre-coated with an adhesive through the adhesive coating component 6. The two rotation wheels 61 rotate in reverse to drive the adhesive to be coated to the strip material 4 passing between the two rotation wheels 61. Such design ensures that every part of the strip material 4 is coated with adhesive, thus strengthening the firmness of the woven Luneburg lens structure.

It should be noted that after the weaving of the Luneburg lens is completed, the entire Luneburg lens may be soaked and coated with adhesive, which also has the effect of strengthening the structural stability of the Luneburg lens.

In an optional embodiment, the apparatus for manufacturing the Luneburg lens further includes a first control motion component 7. The first control motion component 7 is detachably connected to a side of the winding and weaving main body 1 away from the winding member 2.

The first control motion component 7 includes a curved track 71, a motion component 72 and a second driver 73. The motion component 72 is adapted to the curved track 71, and the winding and weaving main body 1 is disposed at the curved track 71 through the motion component 72. Under the drive of the second driver 73, the winding and weaving main body 1 may move along an extension direction of the curved track 71.

In an embodiment, as shown in FIG. 1, when weaving a spherical structure, the apparatus for manufacturing the Luneburg lens further includes the first control motion component 7. The winding and weaving main body 1 and the first control motion component 7 are detachably connected with each other. After completing the winding and weaving, the strip material 4 and the winding and weaving main body 1 may be removed together from the first control motion component 7 to obtain the required Luneburg lens.

As shown in FIG. 2, the first control motion component 7 includes the curved track 71, the motion component 72 and the second driver 73. An end of the winding and weaving main body 1 is connected to the strip material 4, and another end of the winding and weaving main body 1 is disposed at the curved track 71. The second driver 73 drives the motion component 72 to move on the curved track 71, thereby driving the winding and weaving main body 1 to move along the extension direction of the curved track 71. A motion angle of the motion component 72 on the curved track 71 is greater than or equal to 180°.

For example, a motion trajectory for weaving the spherical Luneburg lens is that the first driver drives the winding member 2 to rotate around an axis direction of the winding member 2, and the strip material support 3 is driven to drive the strip material 4 to rotate and wind onto the fixing position 11 at a top of the winding and weaving main body 1. Under an action of the first control motion component 7, the winding and weaving main body 1 moves back and forth along the extension direction of the curved track 71, winding the strip material 4 layer by layer. After the winding is completed, the winding and weaving main body 1 is removed to obtain the Luneburg lens with corresponding structure.

It should be noted that, as shown in FIG. 1, the motion component 72 is a gear structure, and the curved track 71 is a gear ring structure. The motion component 72 and the curved track 71 mesh and drive the winding and weaving main body 1 to move along the curved track 71. In another example, the motion component 72 may be a vortex rod structure, and the curved track 71 is a turbine structure. The motion component 72 and the curved track 71 form a transmission structure to drive the winding and weaving main body 1 to move. The motion component 72 may be also in other combinations such as threads and screws. Therefore, all components that may achieve transmission function may be used as the motion component 72 and the curved track 71. That is, the transmission components that may drive the winding and weaving main body 1 to move along the curved track 71 fall within the protection scope of the embodiments of the present application.

In an optional embodiment, the first control motion component 7 further includes a limiter 74.

The limiter 74 is disposed at a side of the curved track 71 away from the winding and weaving main body 1, and the limiter 74 is provided corresponding to the motion component 72.

In an embodiment, as shown in FIG. 2, below the curved track 71 of the first control motion component 7 is equipped with the limiter 74, and the limiter 74 is used to limit the motion of the motion component 72 on the curved track 71 to prevent the motion component 72 from falling off the curved track 71.

In an optional embodiment, the apparatus for manufacturing the Luneburg lens further includes a second control motion component 8. The second control motion component 8 is connected to an end of the first control motion component 7.

The second control motion component 8 includes a rotating motion shaft 81 and a third driver 82. The rotating motion shaft 81 is connected to an end of the curved track 71. Under a drive of the third driver 82, the rotating motion shaft 81 may drive the winding and weaving main body 1 to rotate around the fixing position 11.

In an embodiment, an end of the first control motion component 7 is equipped with the second control motion component 8. As shown in FIG. 1, the second control motion component 8 includes the rotating motion shaft 81 and the third driver 82, and the rotating motion shaft 81 is connected to a left end of the curved track 71. In another embodiment, the rotating motion shaft 81 may be set at a right end of the curved track 71. The third driver 82 drives the rotating motion shaft 81 to perform a configured circular motion, and the first control motion component 7 is driven to perform a configured circular motion as a whole, thereby driving the winding and weaving main body 1 to rotate around the fixing position 11.

It should be noted that a geometric rotation center axis corresponding to the rotational motion of the strip material support 3 driven by the winding member 2, a geometric rotation center axis corresponding to the circular motion of the first control motion component 7, and a geometric rotation center axis corresponding to the circular motion of the rotating motion axis 81 are perpendicular to each other in geometric space and have a common geometric intersection point, and the common geometric intersection point is exactly at a center of the fixing position 11 of the winding and weaving main body 1.

On the basis of the above embodiments, for example, the motion trajectory of weaving the spherical Luneburg lens is that the first driver drives the winding member 2 to rotate around the axis direction of the winding member 2, and the strip material support 3 is driven to drive the strip material 4 to rotate and wind onto the fixing position 11 at the top of the winding and weaving main body 1. Under an action of the first control motion component 7, the winding and weaving main body 1 moves back and forth along the extension direction of the curved track 71. At the same time, under an action of the second control motion component 8, the winding and weaving main body 1 rotates around the fixing position 11, and the strip material 4 is wound layer by layer, simultaneously achieving staggered weaving of the strip material 4. After the winding is completed, the winding and weaving main body 1 is removed to obtain a spherical or ellipsoidal Luneburg lens with staggered weaving.

Based on the aforementioned apparatus for manufacturing the Luneburg lens, the embodiments of the present application further provide a method for manufacturing a Luneburg lens. The method for manufacturing a Luneburg lens is used to manufacture a Luneburg lens using the apparatus for manufacturing the Luneburg lens as described in any embodiment above. The method for manufacturing the Luneburg lens includes the following steps:
step 1: preparing a winding and weaving main body 1 and a strip material 4;
step 2: threading a free end of the strip material 4 through a first via hole 31 and a fixing position 11 sequentially; and
step 3: starting a first driver to drive the winding member 2 for driving the strip material support 3 to rotate around an axis direction of the winding member 2 to manufacture a Luneburg lens, where the strip material 4 is winded around the winding and weaving main body 1.

In an embodiment, firstly, before weaving, based on a premise that a variation law of a relative dielectric constant of the Luneburg lens needs to satisfy: ε (r) = 2- (r/R)² (0 ≤ r ≤ R), where r is a distance from the current position to a center of a sphere, and R is a radius of a Luneburg lens antenna. Through an electromagnetic simulation software, the winding and weaving main body 1 and the strip material 4 are designed, and the corresponding winding and weaving main body 1 and the strip material 4 are prepared for use.

Secondly, using the above apparatus for manufacturing the Luneburg lens, after the prepared strip material 4 is passed through the adhesive coating component 6, the free end of the prepared strip material 4 is sequentially passed through the second via hole 51 on the tensioning member 5, the first via hole 31 on the strip material support 3, and the fixing position 11 on the winding and weaving main body 1, and then the prepared strip material 4 is fixedly connected to the fixing position 11. The strip material 4 is supported by the winding member 2 and the strip material support 3, at the same time, the strip material 4 is tensioned through the tensioning member 5, and the overall state is waiting to be woven.

Finally, the first driver is started to drive the winding and weaving main body 1 to move, causes the strip material 4 to wind on the winding and weaving main body 1 to manufacture the Luneburg lens.

The method for manufacturing the Luneburg lens provided by the embodiments of the present application uses strip material 4 consists of homogeneous material as the raw material, and manufactures the Luneburg lens by winding and weaving, without the need for forming molds. The process is simple, one-time molding, and manufacturing efficiency is improved. This manufacturing method solves the problems of low manufacturing efficiency, complex process, and high costs in Luneburg lens manufacturing in the related art. The interface between each layer of the Luneburg lens manufactured by this manufacturing method is tightly bonded, and the material is continuous, which is conducive to maintaining the stability of the electrical performance.

In an optional embodiment, the winding member 2 rotates around the axis direction of the winding member 2. The winding and weaving main body 1 moves along the extension direction of the curved track 71, and rotates around the fixing position 11. The strip material 4 is winded around the winding and weaving main body 1 to manufacture a spherical or ellipsoidal Luneburg lens.

In an embodiment, when manufacturing a spherical or ellipsoidal Luneburg lens, the manufacturing method may be: after the apparatus for manufacturing the Luneburg lens and the strip material 4 are in a ready state to weave as a whole, the first driver is started. The first driver drives the winding member 2 to rotate around the axis direction of the winding member 2, driving the strip material support 3 to rotate, and then the strip material 4 is driven to rotate and wind on the fixing position 11 of the winding and weaving main body 1. The winding and weaving main body 1 moves back and forth along the extension direction of the curved track 71. At the same time, the winding and weaving main body 1 rotates around the fixing position 11, to achieve a staggered layer-by-layer weaving of the strip material 4, and then a spherical or ellipsoidal Luneburg lens with staggered weaving is obtained. In addition, by controlling the second driver 73 and the third driver 82, the winding and weaving spacing of the strip material 4 may be adjusted to obtain a spherical or ellipsoidal Luneburg lens with the required size. No specific limit is made on the size of the manufactured Luneburg lens, and in actual operation, winding and weaving may be carried out according to the needs.

The embodiments of the present application further provide a Luneburg lens, and the Luneburg lens is manufactured using the manufacturing method for the Luneburg lens provided by any embodiment above. The Luneburg lens includes: a winding and weaving main body 1 and a strip material 4.

The winding and weaving main body 1 includes a winding portion 12 and a support portion 13. The winding portion 12 is equipped with a fixing position 11, an end of the strip material 4 is connected to the fixing position 11, and the support portion 13 is connected to the winding portion 12.

The strip material 4 is disposed at a surface of the winding portion 12 in a winding manner, and between the winding layers composed of the strip material 4 is equipped with an adhesive 9.

In an embodiment, the material of the strip material 4 may be any one of polypropylene, polyethylene, polyvinyl chloride, polystyrene, polyurethane, and polycarbonate, and is not limited to the above materials. The strip material 4 may be prepared using a uniform-substrate material, or be prepared by sandwich metal wire in foam treated substrate material, or be prepared by sandwich high dielectric constant ceramic particle in foam treated substrate material. The cross-section of the strip material 4 may be one of various shapes such as circular or rectangular, and the specific shape of the cross-section is not limited. The strip material 4 may be a single strand or may be made by twisting a plurality of strands together.

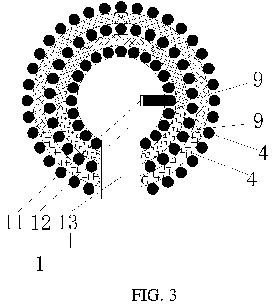

As shown in FIG. 3, the adhesive 9 is coated between the winding layers formed by the strip material 4, and the added adhesive 9 is used to make the woven Luneburg lens structure firmer.

The Luneburg lens provided by the embodiments of the present application uses strip material 4 consists of homogeneous material as the raw material, and manufactures the Luneburg lens by winding and weaving, without the need for forming molds. The process is simple, one-time molding, and manufacturing efficiency is improved, solving the problems of difficult access to raw materials, high manufacturing costs, and low manufacturing efficiency of the Luneburg lens in the related art. In the Luneburg lens provided by the embodiments of the present application, the strip material 4 is disposed at the surface of the winding portion 12 in a winding manner, and the dielectric constant shows a gradient decreasing distribution in the two-dimensional direction. The structure of the Luneburg lens is simple, the manufacturing costs are low, and the radiation efficiency is high.

In an optional embodiment, the Luneburg lens is spherical or ellipsoidal.

In an embodiment, the Luneburg lens manufactured by the apparatus for manufacturing the Luneburg lens described in the above embodiments may be spherical or ellipsoidal. FIG. 3 shows a spherical Luneburg lens manufactured by the winding and weaving main body 1 and the strip material 4, which is only an example. By adjusting the rotation speed and rotation direction of the driver and adjusting the winding and weaving spacing of the strip material 4, various required sizes of spherical or ellipsoidal Luneburg lenses may be obtained.

In an optional embodiment, the dielectric constant of the strip material 4 is not less than 2.

In an embodiment, the strip material 4 has a uniform dielectric constant along a length direction, with the dielectric constant greater than or equal to 2. Selecting such a material as the strip material 4, the spherical Luneburg lens manufactured by the apparatus for manufacturing the Luneburg lens described above shows a regular gradient decrease in dielectric constant distribution in the two-dimensional direction of the sphere, achieving a predetermined ordered decrease in the equivalent dielectric constant of the mixture consists of air and strip material from inside to outside. When a radiation unit is placed along the surface of the Luneburg lens, the emitted spherical wave is refracted into a plane wave by the Luneburg lens with a gradient distribution of dielectric constant, enabling the Luneburg lens antenna to form a narrow-beam and get a high gain, thus having excellent radiation effects.

Finally, it should be noted that the above embodiments are only used to illustrate the technical solutions of the present application, not to limit it; although the present application has been described in detail with reference to the aforementioned embodiments, those of ordinary skill in this field should understand that they may still modify the technical solutions recorded in the aforementioned embodiments, or equivalently replace some of the technical features; and these modifications or replacements do not separate the essence of the corresponding technical solutions from the scope of the technical solutions of the various embodiments of the present application.

## Claims

1. An apparatus for manufacturing a Luneburg lens, comprising: a winding and weaving main body, a winding member, a strip material support and a first driver,
wherein the winding and weaving main body is equipped with a fixing position, the fixing position is used to fix an end of a strip material, the strip material support is equipped with a first via hole, and the strip material passes through the first via hole; and
the winding member is connected to an end of the strip material support away from the winding and weaving main body, the winding member is connected to the first driver, and under a drive of the first driver, the winding member drives, through the strip material support, the strip material to wind and weave on a surface of the winding and weaving main body.

2. The apparatus for manufacturing the Luneburg lens of claim 1, further comprising: a tensioning member, wherein the tensioning member is disposed at a side of the strip material support away from the winding and weaving main body, the tensioning member is equipped with a second via hole, the strip material passes through the second via hole, and the tensioning member is used to adjust an included angle between the strip material and the strip material support.

3. The apparatus for manufacturing the Luneburg lens of claim 1, further comprising: an adhesive coating component, wherein the adhesive coating component comprises two rotation wheels, the strip material is sandwiched between the two rotation wheels, and rotation directions of the two rotation wheels are opposite.

4. The apparatus for manufacturing the Luneburg lens of claim 1, further comprising: a first control motion component, wherein the first control motion component is detachably connected to a side of the winding and weaving main body away from the winding member; and
the first control motion component comprises a curved track, a motion component and a second driver, wherein the motion component is adapted to the curved track, and the winding and weaving main body is disposed at the curved track through the motion component, and under a drive of the second driver, the winding and weaving main body moves along an extension direction of the curved track.

5. The apparatus for manufacturing the Luneburg lens of claim 4, wherein the first control motion component further comprises a limiter,
wherein the limiter is disposed at a side of the curved track away from the winding and weaving main body, and the limiter is provided corresponding to the motion component.

6. The apparatus for manufacturing the Luneburg lens of claim 5, further comprising: a second control motion component, wherein the second control motion component is located at an end of the first control motion component; and
the second control motion component comprises a rotating motion shaft and a third driver; the rotating motion shaft is connected to an end of the curved track, and under a drive of the third driver, the rotating motion shaft drives the winding and weaving main body to rotate around the fixing position.

7. A method for manufacturing a Luneburg lens based on the apparatus for manufacturing the Luneburg lens in any one of the claims 1 to 6, comprising:
preparing a winding and weaving main body and a strip material;
threading a free end of the strip material through a first via hole and a fixing position sequentially; and
starting a first driver to drive the winding member for driving a strip material support to rotate around an axis direction of the winding member to manufacture a Luneburg lens, wherein the strip material is winded around the winding and weaving main body.

8. The method for manufacturing the Luneburg lens of claim 7, wherein the winding member rotates around the axis direction of the winding member, the winding and weaving main body moves along an extension direction of a curved track, the winding and weaving main body rotates around a fixing position, and the strip material is winded around the winding and weaving main body to manufacture a spherical or ellipsoidal Luneburg lens.

9. A Luneburg lens, manufactured according to the method for manufacturing the Luneburg lens of claims 7 or 8, comprising: a winding and weaving main body and a strip material,
wherein the winding and weaving main body comprises a winding portion and a support portion, the winding portion is equipped with a fixing position, an end of the strip material is connected to the fixing position, and the support portion is connected to the winding portion; and
the strip material is disposed at a surface of the winding portion in a winding manner, and between a winding layer composed of the strip material is equipped with an adhesive.

10. The Luneburg lens of claim 9, wherein the Luneburg lens is spherical or ellipsoidal.

11. The Luneburg lens of claim 9, wherein a dielectric constant of the strip material is not less than 2.
